Europäisches Patentamt

European Patent Office

Office européen des brevets

(19)

(11) **EP 0 774 661 B1**

(12) **EUROPÄISCHE PATENTSCHRIFT**

(45) Veröffentlichungstag und Bekanntmachung des Hinweises auf die Patenterteilung:
**17.05.2000 Patentblatt 2000/20**

(51) Int Cl.⁷: **G01N 27/12**

(21) Anmeldenummer: **96117782.1**

(22) Anmeldetag: **06.11.1996**

(54) **Sensor für Halogene und Halogenwasserstoffe**

Sensor for halogens or hydrogen halides

Capteur pour halogènes ou halogénures d'hydrogène

(84) Benannte Vertragsstaaten:
**DE FR GB IT**

(30) Priorität: **17.11.1995 DE 19542974**

(43) Veröffentlichungstag der Anmeldung:
**21.05.1997 Patentblatt 1997/21**

(73) Patentinhaber: **SIEMENS AKTIENGESELLSCHAFT**
**80333 München (DE)**

(72) Erfinder:
• **Lampe, Uwe, Dr.**
**21614 Buxtehude (DE)**
• **Meixner, Hans, Prof. Dr.**
**85540 Haar (DE)**
• **Fleischer, Maximilian, Dr.**
**85635 Höhenkirschen (DE)**

(56) Entgegenhaltungen:
**WO-A-94/00854**     **GB-A- 1 424 398**

• **PATENT ABSTRACTS OF JAPAN vol. 2, no. 1 (E-001), 5.Januar 1978 & JP-A-52 113294 (TOSHIBA CORP.), 22.September 1977,**
• **PATENT ABSTRACTS OF JAPAN vol. 2, no. 68 (E-035), 24.Mai 1978 & JP-A-53 033696 (TOSHIBA CORP.), 29.März 1978,**

**Beschreibung**

Die Erfindung betrifft einen Sensor für Halogene und Halogenwasserstoffe.

Wenn Sensoren auf der Basis halbleitender Metalloxide, wie zum Beispiel in EP 04 64 243 oder EP 04 64 244 beschrieben, zur Detektion von Halogenen oder Halogenwasserstoffen eingesetzt werden sollen, kann nur eine geringe Empfindlichkeit genutzt werden. Die Querempfindlichkeit auf andere Komponenten, z. B. Sauerstoff oder Kohlenwasserstoffe ist deutlich höher als die Empfindlichkeit auf Halogene oder Halogenwasserstoffe. Eine gezielte, selektive Detektion von zum Beispiel Chlorwasserstoff in Rauchgas ist hiermit nicht möglich.

Elektrochemische Zellen, welche im allgemeinen eine empfindliche und selektive Detektion von Halogenen und Halogenwasserstoffen ermöglichen, sind aufgrund der rauhen Chemie von Rauchgasen nicht einsetzbar.

Analysegeräte, z. B. auf optischer Basis, zur Detektion von Halogenen oder Halogenwasserstoffen sind teuer und der Bedienungs- und Wartungsaufwand ist hoch.

Aus US 4 893 108 ist ein Sensor zur Erfassung von Halogenen bekannt, der auf einem dualen Reaktionsmechanismus basiert. Zum einen wird eine Reaktion eines nichtleitenden Substrats mit dem Halogen verwendet und zum anderen eine durch Hitze erzeugte Änderung des Widerstandes eines auf dem Substrat angebrachten gassensitiven Metallfilms. Zusätzlich tritt ein Ionenaustausch zwischen den aktiven Materialien, nämlich dem Substrat und dem Metallfilm, auf. Dieser Sensor hat den Nachteil, daß Halogenwasserstoffe nicht nachgewiesen werden können. Weiterhin hat dieser Sensor den Nachteil, daß zwei Meßsignale zu erfassen und auszuwerten sind.

Die Aufgabe der Erfindung ist es, einen Sensor für Halogene und Halogenwasserstoffe anzugeben, der eine hohe Empfindlichkeit für Halogene und Halogenwasserstoffe aufweist und dessen Querempfindlichkeit gegenüber den nicht zu detektierenden Gasen niedrig ist.

Vorteilhafterweise entfällt für den erfindungsgemäßen Sensor der Bedienungs- und Wartungsaufwand.

Ein weiterer Vorteil des erfindungsgemäßen Sensors liegt in der Robustheit gegenüber rauhen Einsatzbedingungen.

Die Aufgabe wird durch einen Sensor gemäß dem Patentanspruch 1 und ein Verfahren zur Herstellung des Sensors gemäß Anspruch 10 gelöst.

Vorteilhafte Weiterbildungen ergeben sich aus den Unteransprüchen.

So ist es von Vorteil zur Detektion von Chlor oder Chlorwasserstoff gemäß Anspruch 2 ein Metallhalogenid das Chlor, aufweist, einzusetzen, um die Empfindlichkeit zu erhöhen.

Zur Erhöhung der Empfindlichkeit auf Brom oder Bromwasserstoff ist es von Vorteil, gemäß Anspruch 3, ein Metallhalogenid, das Brom aufweist, einzusetzen.

Zur Erhöhung der Empfindlichkeit auf Fluor oder Fluorwasserstoff ist es von Vorteil, gemäß Anspruch 4, ein Metallhalogenid, das Fluor aufweist, einzusetzen.

Zur Erhöhung der Empfindlichkeit auf Jod ist es von Vorteil, gemäß Anspruch 5, ein Metallhalogenid, das Jod aufweist, einzusetzen.

Die in Anspruch 6 angegebenen Metalle haben den Vorteil, daß hiermit temperaturbeständige Verbindungen aufgebaut werden können.

Zur Erhöhung der Empfindlichkeit ist es von Vorteil, gemäß Anspruch 6, die Betriebstemperatur zwischen 600 und 1000 °C zu wählen.

Die Erfindung wird anhand einer Figur weiter erläutert.

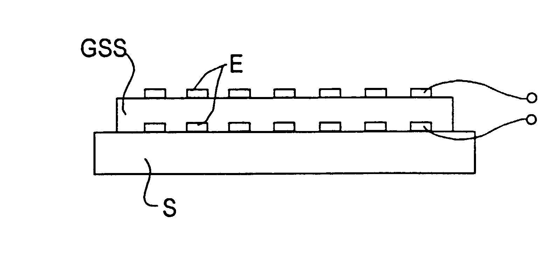

Die Figur zeigt den prinzipiellen Aufbau des erfindungsgemäßen Sensors für Halogen oder Halogenwasserstoff.

Wie in der Figur gezeigt ist, ist auf ein Substrat S ein Metallhalogenid, im folgenden auch als gassensitive Schicht GSS bezeichnet, aufgebracht. Das mittels eines Heizelements auf eine definierte Betriebstemperatur, vorzugsweise 600 bis 1100 °C, gebrachte Metallhalogenid weist eine eindeutige Abhängigkeit der Leitfähigkeit von der Konzentration des zu messenden Halogens oder Halogenwasserstoffs auf. Die Heizstruktur ist in der Figur nicht dargestellt.

Um eine hohe Materialstabilität zu erzielen, stammt das Metall des Metallhalogenids aus der Alkali- oder Erdalkaligruppe.

Zur Detektion von $Cl_2$ oder HCl weist das Metallhalogenid ein Chlorid, zur Detektion von $Br_2$ oder HBr ein Bromid und zur Detektion von $F_2$ oder HF ein Fluorid auf.

Im weiteren wird die Funktionsweise des erfindungsgemäßen Sensors anhand eines Beispiels erläutert.

Bei Metallchlorid steht dessen Gehalt an Chloridionen bei ausreichend hohen Temperaturen, typischerweise um 1000 °C, im Gleichgewicht mit der Chlorkonzentration der Umgebungsatmosphäre. Dadurch ändert sich die Anzahl ionisierter Chlorfehlstellen im $V_{Cl}$ im Kristallgitter und damit reversibel die elektronische Leitfähigkeit des Metallchlorids.

Die Selektivität dieses Sensors auf $Cl_2$ gegenüber $O_2$ beruht auf der Tatsache, daß $Cl_2$ eines der konstituierenden Elemente des Kristallgitters ist und nicht $O_2$. Das geladene Sauerstoffion paßt aufgrund der anderen chemischen Valenz nicht in die für Chlorionen vorgesehenen Plätze des Kristallgitters, so daß keine starke Querempfindlichkeit auf Sauerstoff vorliegt.

Allgemein gilt:

Bei einem Metallhalogenid steht dessen Gehalt an Halogenionen bei ausreichend hohen Temperaturen, typischerweise um 1000 °C, im Gleichgewicht mit der Halogenkonzentration der Umgebungsatmosphäre. Dadurch ändert sich die Anzahl ionisierter Halogenfehlstellen im Kristallgitter und damit reversibel die elektronische Leitfähigkeit des Metallhalogenids.

Das Substrat S besteht aus einem elektrisch nicht leitenden Material. Der Widerstand des Metallhalogenids GSS wird über Elektroden E gemessen. Falls das Metallhalogenid GSS in Form einer Dünnschicht auf das Substrat aufgebracht ist, werden Interdigitalelektroden verwendet.

Zur Erhöhung der Meßgenauigkeit ist es von Vorteil die Betriebstemperatur zu regeln. Dazu ist die tatsächliche Temperatur des Sensors zu erfassen. Dies kann beispielsweise durch einen Temperaturfühler bewerkstelligt werden.

Sofern der Sensor auch mechanisch belastet wird, kann zu dessen Schutz ein Sensorgehäuse vorgesehen sein (nicht in der Figur gezeigt).

Das gassensitive Metallhalogenid GSS kann als Bulk-Material (Einkristall bzw. polykristalline Keramik) vorliegen. Diese Variante beinhaltet Vorteile bezüglich der chemischen Stabilität.

Die Ausführung des Metallhalogenids als dünne Schicht, typischerweise 0,1 bis 2 μm, ist zu bevorzugen, wenn kurze Ansprechzeiten benötigt werden. Das Metallhalogenid wird dann durch Sputter- oder Aufdampftechnik auf das Substrat aufgebracht. Hiermit werden kurze Diffusionszeiten des zu detektierenden Halogenids durch das gassensitive Metallhalogenid GSS gewährleistet.

Durch den Einsatz einer offenporigen Dickschicht, deren Dicke zwischen 2 und 20 μm liegt, wie sie z. B. durch Verwendung von Siebdrucktechnik erzeugt werden kann, führt zu einer verbesserten, das heißt kürzeren Diffusionszeit und damit zu einer hohen Ansprechgeschwindigkeit.

Die Präparation der gassensitiven Schicht GSS gestaltet sich wie folgt:

1. Aufbringen der gassensitiven Schicht GSS, z. B. durch Sputterverfahren, Elektronenstrahlverdampfung, Siebdruck oder Spincoating auf das Substrat S.

2. Temperung der gassensitiven Schicht GSS in einer das jeweilige Halogenid enthaltenden Atmosphäre bei ca. 1000 bis 1300 °C zur Kristallisation der gassensitiven Schicht GSS und zur Einstellung der Stöchiometrie Metall/Halogen.

Der Sensor wird vorteilhafterweise bei Temperaturen zwischen 600 und 1100 °C betrieben, wobei üblicherweise die elektronische Leitfähigkeit σ der gassensitiven Schicht GSS gemessen wird.

Die Leitfähigkeit σ hängt von der Halogenidkonzentration (= Partialdruck $p_{Hal}$ wie folgt ab:

$$\sigma \propto P_{Hal}{}^{k}$$

wobei k typischerweise zwischen 0 und 1 liegt.

Die Abhängigkeit der Leitfähigkeit σ von der Temperatur T besitzt den halbleitertypischen thermisch aktiven Verlauf:

$$\sigma \propto e^{-\frac{E_A}{k_B} \cdot T}$$

wobei

$E_A$ = Aktivierungsenergie (im Bereich von eV),
$k_B$ = Bolzmankonstante,
T = absolute Temperatur.

Zur Temperaturkompensation kann eine Temperaturregelung benutzt werden.

Die Detektion von Halogenwasserstoffen wird dadurch gewährleistet, daß sich bei einer hohen Sensortemperatur in der Nähe der Sensoroberfläche ein Gleichgewicht einstellt. Beispielsweise gilt für die Detektion von Chlorwasserstoff:

$$2HCl \rightleftarrows H_2 + Cl_2$$

Aus Gründen der Reaktionsenthalpie wird das Gleichgewicht mit steigender Temperatur weiter nach rechts verschoben. Detektiert wird dann das gebildete elementare Halogen.

**Patentansprüche**

1.  Sensor für Halogene und Halogenwasserstoffe,

    -   bei dem ein elektrisch nichtleitendes Substrat (S) vorgesehen ist,
    -   bei dem als gassensitives Material (GSS) ein Metallhalogenid auf dem Substrat (S) aufgebracht ist,
    -   bei dem ein Mittel zum Heizen vorgesehen ist,
    -   bei dem Meßelektroden auf dem gassensitiven Material (GSS) zur Messung dessen elektrischen Widerstandes vorhanden sind.

2.  Sensor nach Anspruch 1,
    bei dem zur Detektion von Chlor oder Chlorwasserstoff das Metallhalogenid Chlor aufweist.

3.  Sensor nach Anspruch 1,

bei dem zur Detektion von Brom oder Bromwasserstoff das Metallhalogenid Brom aufweist.

4. Sensor nach Anspruch 1,
bei dem zur Detektion von Fluor oder Fluorwasserstoff das Metallhalogenid Fluor aufweist.

5. Sensor nach Anspruch 1,
bei dem zur Detektion von Jod das Metallhalogenid Jod aufweist.

6. Sensor nach einem der Ansprüche 1 - 5,
bei dem das Metall des Metallhalogenids aus der Gruppe der Alkali- oder Erdalkalimetalle stammt.

7. Sensor nach einem der Ansprüche 1 - 6,
bei dem das Metallhalogenid eine Dickschicht ist.

8. Sensor nach einem der Ansprüche 1 - 6,
bei dem das Metallhalogenid eine Dünnschicht ist.

9. Sensor nach Anspruch 1,
bei dem die Betriebstemperatur bei 600 - 1000°C liegt.

10. Verfahren zur Herstellung eines Sensors nach einem der Ansprüche 1 - 9,

- bei dem auf das Substrat (S) das Metallhalogenid durch Sputtern, Elektronenstrahlverdampfung, Siebdruck oder Spin Coating aufgebracht wird,
- bei dem das Metallhalogenid in einer das jeweilige Halogenid enthaltenden Atmosphäre bei 1000° - 1300°C getempert wird.

**Claims**

1. Sensor for halogens and hydrogen halides,

- in which an electrically nonconducting substrate (S) is provided,
- in which a metal halide is applied as gas-sensitive material (GSS) to the substrate (S),
- in which a heating means is provided,
- in which there are measuring electrodes on the gas-sensitive material (GSS) for measuring its electrical resistance.

2. Sensor according to Claim 1, in which the metal halide contains chlorine in order to detect chlorine or hydrogen chloride.

3. Sensor according to Claim 1, in which the metal halide contains bromine in order to detect bromine or hydrogen bromide.

4. Sensor according to Claim 1, in which the metal halide contains fluorine in order to detect fluorine or hydrogen fluoride.

5. Sensor according to Claim 1, in which the metal halide contains iodine in order to detect iodine.

6. Sensor according to one of Claims 1 - 5, in which the metal of the metal halide belongs to the alkali metal group or the alkaline earth metal group.

7. Sensor according to one of Claims 1 - 6, in which the metal halide is a thick film.

8. Sensor according to one of Claims 1 - 6, in which the metal halide is a thin film.

9. Sensor according to Claim 1, in which the operating temperature is 600 - 1000°C.

10. Process for producing a sensor according to one of Claims 1 - 9,

- in which the metal halide is applied on the substrate (S) by sputtering, electron-beam evaporation, screen printing or spin coating,
- in which the metal halide is heat-treated at 1000°- 1300°C in an atmosphere containing the respective halide.

**Revendications**

1. Capteur pour halogènes et halogénures d'hydrogène,

- dans lequel on prévoit un substrat (S) électriquement non conducteur,
- dans lequel on applique un halogénure métallique, en tant que matériau sensible au gaz (GSS), sur le substrat (S),
- dans lequel on prévoit un moyen de chauffage,
- dans lequel des électrodes de mesure sont présentes sur le matériau sensible au gaz (GSS) afin de mesurer sa résistance électrique.

2. Capteur selon la revendication 1, dans lequel, pour la détection de chlore ou de gaz hydrochlorique, l'halogénure métallique contient du chlore.

3. Capteur selon la revendication 1, dans lequel, pour la détection de brome ou de bromure d'hydrogène, l'halogénure métallique contient du brome.

4. Capteur selon la revendication 1, dans lequel, pour la détection de fluor ou de fluorure d'hydrogène, l'halogénure métallique contient du fluor.

5. Capteur selon la revendication 1, dans lequel, pour la détection d'iode, l'halogénure métallique contient de l'iode.

6. Capteur selon l'une des revendications 1 à 5, dans lequel le métal de l'halogénure métallique provient du groupe des métaux alcalins ou alcalino-terreux.

7. Capteur selon l'une des revendications 1 à 6, dans lequel l'halogénure métallique est une couche épaisse.

8. Capteur selon l'une des revendications 1 à 6, dans lequel l'halogénure métallique est une couche mince.

9. Capteur selon la revendication 1, dans lequel la température de service est comprise entre 600 et 1000°C.

10. Procédé de fabrication d'un capteur selon l'une des revendications 1 à 9,

   - dans lequel on applique l'halogénure métallique sur le substrat (S) par pulvérisation, évaporation par faisceau d'électrons, sérigraphie ou application par centrifugation,
   - dans lequel l'halogénure métallique est trempé dans une atmosphère contenant l'halogénure respectif, à une température comprise entre 1000 et 1300°C.